# EUROPÄISCHE PATENTSCHRIFT

(11) **EP 1 766 765 B1**
(45) Veröffentlichungstag und Bekanntmachung des Hinweises auf die Patenterteilung: **24.06.2015**
(21) Anmeldenummer: 05767933.4
(22) Anmeldetag: 04.07.2005
(51) Int. Cl.: H02M 5/458, H02J 3/36, H02J 3/34

(54) **VERFAHREN ZUM REGELN EINES AN EINER GLEICHSPANNUNGSQUELLE ANGESCHLOSSENEN STROMRICHTERS**
METHOD FOR CONTROLLING AN ELECTRONIC POWER CONVERTER THAT IS CONNECTED TO A DIRECT-CURRENT SOURCE
PROCEDE POUR REGULER UN CONVERTISSEUR DE COURANT RELIE A UNE SOURCE DE TENSION CONTINUE

(30) Priorität: 09.07.2004 DE 102004034333
(43) Veröffentlichungstag der Anmeldung: 28.03.2007
(73) Patentinhaber: Siemens Aktiengesellschaft, 80333 München (DE)
(72) Erfinder: FLOTTEMESCH, Jörg, 91088 Bubenreuth (DE); WEINHOLD, Michael, 91056 Erlangen (DE); ZUROWSKI, Rainer, 91301 Forchheim (DE)
(86) Internationale Anmeldenummer: PCT/EP2005/053177
(87) Internationale Veröffentlichungsnummer: WO 2006/005695

(56) Entgegenhaltungen:
- DE-A1- 4 115 856
- US-A- 5 617 012

## Beschreibung

Die Erfindung betrifft ein Verfahren zum Regeln eines an einer Gleichspannungsquelle angeschlossenen Stromrichters mit abschaltbaren Leistungshalbleiterschaltern, der zur Speisung eines Verteilnetzes mit Drehspannung vorgesehen ist.

Verfahren zum Regeln von Stromrichtern an einer Gleichspannung sind beispielsweise aus der Hochspannungsgleichstromübertragung bekannt geworden. Die Hochspannungsgleichstromübertragung wird einerseits zur Übertragung elektrischer Energie über weite Strecken eingesetzt. Eine andere Anwendung betrifft die Kopplung von Netzen, welche beispielsweise eine unterschiedliche Drehspannungsfrequenz aufweisen. Zur Hochspannungsgleichstromübertragung sind zwei Stromrichter über einen Gleichstromkreis beziehungsweise Gleichspannungszwischenkreis miteinander verbunden. Die Stromrichter sind jeweils an ein Drehspannungsnetz angeschlossen und bestehen im Wesentlichen aus Leistungshalbleiterschaltern. Selbstgeführte Stromrichter, also Stromrichter mit selbstgeführten Leistungshalbleiterschaltern, werden verstärkt bei der Netzkopplung eingesetzt. Dies gilt insbesondere für die Anbindung eines Inselnetzes an ein Versorgungsnetz. Inselnetze verfügen über keine eigene signifikante Stromerzeugung, so dass ein Netzaufbau - mit anderen Worten ein Black-Start - sowie eine netzgeführte Kommutierung des Stromes erschwert sind. Beispielhafte Stromrichter für Inselnetze sind die statischen Bahnstromrichter in der dezentralen Bahnstromversorgung, wo einzelne Fahrdrahtabschnitte von jeweils einem einzigen Stromrichter gespeist werden.

In allen Energieversorgungsnetzen ist der selektive Netzschutz eine grundsätzliche Voraussetzung für den sicheren Netzbetrieb. Kommt es in einem Netzteil zu einem Kurzschluss, muss dieser fehlerhafte Netzteil von den Netzschutzgeräten identifiziert und so schnell wie möglich abgeschaltet werden. Dabei ist es wichtig, dass so wenige Verbraucher wie möglich von der Schutzabschaltung betroffen sind. Es sollten daher immer nur möglichst wenige Betriebsmittel und Verbraucher von der Spannungsversorgung abgetrennt werden. Ein Schutzgerät erkennt beispielsweise einen Fehler in dem ihm zugeordneten unterlagerten Netzteil dadurch, dass der in das Netzteil hinein fließende Strom während eines vorher eingestellten Mindestzeitraums über einen vorher eingestellten Schwellenwert liegt. Diese Schutzart wird als Überstromzeitschutz bezeichnet. Liegt eine solche Überstrombedingung vor, wird durch das Schutzgerät das sofortige Abtrennen des unterlagerten fehlerbehafteten Teilnetzes über einen Leistungsschalter veranlasst.

Im Versorgungsnetz werden Schutzgeräte zur Erhöhung der Versorgungssicherheit hierarchisch eingesetzt. Löst das dem fehlerbehafteten Netzteil zugeordnete Schutzgerät keine Abtrennung aus, dann wird das übergeordnete Schutzgerät, das mehrere Netzteile überwacht, auslösen. Dazu ist dessen Überstromzeitschutz mit entsprechenden größeren Zeit- und Stromschwellenparametern ausgestattet. Dies wird als Schutzstaffelung bezeichnet. Löst erst das übergeordnete Schutzgerät aus, werden allerdings mehrere Netzteile als die eigentlich fehlerbehafteten von der Versorgung abgetrennt. Neben dem Überstromzeitschutz gibt es noch weitere Schutzarten, wie beispielsweise Schieflastschutz, Differentialschutz, Erdfehlerschutz und dergleichen, die von einem Schutzgerät auch gleichzeitig übernommen werden können.

In großen Verbundnetzen wird der zur Fehlerabschaltung notwendige Kurzschlussstrom von den Generatoren im Netz geliefert. Das sind im Wesentlichen Synchronmaschinen. Auch elektrisch nahe gelegene rotierende Maschinen, wie beispielsweise direkt an das Netz angeschlossene Asynchronmaschinen, leisten einen Beitrag zum Fehlerstrom. Diese Motorlasten können einen Fehlerstrombeitrag bis zum Fünffachen ihres Nennstromes liefern.

Ein Netzfehler führt in der Regel dazu, dass die Netzspannung für Lasten an der gleichen Sammelschiene sowie in benachbarten Netzteilen für die Dauer des Fehlers einbricht. Die Regel- und Steuereinheiten von Stromrichtern erkennen einen solchen Spannungseinbruch aufgrund fortlaufender Messung und Auswertung elektrischer Messgrößen wie Netzspannung und Netzströme und schalten sich zumeist ab. Somit leisten diese Netzlasten in der Regel keinen Beitrag zum stationären Fehlerstrom.

Falls das Netz lediglich durch selbstgeführte Stromrichter erzeugt wird, müssen diese alleine den Fehlerstrom aufbringen. Selbstgeführte Stromrichter arbeiten wie gesteuerte Spannungsquellen, deren Innenwiderstand im Wesentlichen von der Reaktanz der Ankoppeldrossel bestimmt wird.

Der vom einspeisenden Stromrichter in das Netz fließende Strom wird von den erzeugten Spannungen und den begrenzenden Impedanzen zwischen Stromrichteranschlussklemmen und dem Fehlerort bestimmt. Liegt der Fehlerort elektrisch nahe der Einspeisung, wirken alleine die Ankoppeldrosseln strombegrenzend. Um Schutzabschaltungen des Stromrichters selbst zu vermeiden, ist daher eine Regelung des Stromrichters vorzusehen, die rechtzeitig eine Veränderung des erzeugten Spannungssystems veranlasst. Dieser kurze Zeitraum bedeutet aber, dass die Schutzgeräte den Fehler nicht über den Überstromzeitschutz erkennen können. Hierzu wäre ein Kurzschlussstrom über einen wesentlich längeren Zeitraum fließend.

Damit es zu keiner Schutzabschaltung des einspeisenden Stromrichters kommt und gleichzeitig maximaler Fehlerstrom zur selektiven Schutzabschaltung geliefert wird, muss die Stromrichterregelung den einspeisenden Stromrichter an einer Stromgrenze betreiben, die unterhalb der Abschaltschwelle der Stromrichter aber oberhalb der Ansprechschwelle der Schutzgeräte liegt.

Aus der DE 41 15 856 A1 ist ein Verfahren zum Abschalten eines Überstromes bei einem Wechselrichter offenbart. Um die Spannungsbeanspruchung der abschaltenden Leistungshalbleiter herabzusetzen, wird vorgeschlagen, dass lediglich einer von zwei den Überstrom führenden gegenphasig angeordneten Leistungshalbleitern abgeschaltet wird. Dies wird zweckmäßigerweise so durchgeführt, dass nach dem Erfassen eines Überstromes eine Phasenhälfte selektiv abgeschaltet wird. Mit anderen Worten werden entweder alle mit dem positiven Gleichspannungsanschluss oder aber alle mit dem negativen Gleichspannungsanschluss verbundenen Halbleiterschalter selektiv abgeschaltet, während der Schaltzustand der restlichen Halbleiterschalter unverändert bleibt.

Dem vorbekannten Verfahren haftet der Nachteil an, dass insbesondere bei Inselnetzanwendungen der Strom durch den Eingriff sehr stark verändert wird und hohe Stromverzerrungen auftreten.

Aufgabe der Erfindung ist es daher, ein Verfahren der eingangs genannten Art bereitzustellen, mit dem an einer Gleichspannung anliegende Stromrichter aufwandsarm und unter Erzeugung geringer Stromverzerrungen im fehlerbehafteten Netz betrieben werden können.

Die Erfindung löst diese Aufgabe durch ein Verfahren zum Regeln eines an einer Gleichspannungsquelle angeschlossenen Stromrichters mit abschaltbaren Leistungshalbleiterschaltern, der zur Speisung eines Verteilnetzes mit Drehspannung vorgesehen ist, bei dem durch die jeweiligen Leistungshalbleiterschalter fließende Ströme unter Gewinnung von den Leistungshalbleiternschaltern jeweils zugeordneten Stromwerten gemessen, die Stromwerte abgetastet und die abgetasteten Stromwerte unter Gewinnung digitaler Stromwerte, digitalisiert werden und die digitalen Stromwerte von einer in einer Regelungseinheit implementierten Logik auf das Vorliegen einer Überstrombedingung überprüft werden, wobei bei Nichterfüllung einer Überstrombedingung die Leistungshalbleiterschalter mit Hilfe einer Nennbetriebsregelung ein- und abgeschaltet werden und bei Vorliegen einer Überstrombedingung wenigstens die Leistungshalbleiterschalter abgeschaltet werden, die mit digitalen Stromwerten belastetet sind, welche die Überstrombedingung erfüllen, nach Ablauf einer Impulssperrdauer und bei digitalen Stromwerten, welche die Überstrombedingung erfüllen, alle Leistungshalbleiterschalter, die mit dem positiven Gleichspannungsanschluss verbunden sind, eingeschaltet und alle Leistungshalbleiterschalter, die mit dem negativen Gleichspannungsanschluss verbunden sind, ausgeschaltet werden oder umgekehrt und wobei bei digitalen Stromwerten, welche nicht die Überstrombedingung erfüllen, die Regelung der Leistungshalbleiterschalter wieder durch die Nennbetriebsregelung erfolgt.

Erfindungsgemäß wird ein Verfahren zur Regelung eines Stromrichters im Kurzschlussfall bereitgestellt. Wesentlich ist, dass das erfindungsgemäße Verfahren Teil der Nennbetriebsregelung ist und somit in bestehende Regel- und Steuereinheiten implementiert werden kann. Somit entfällt im Rahmen der Erfindung die Notwendigkeit, eine separate Hardware mit einem speziellen Kurzschlussregelverfahren vorzusehen und dieses mit bestehenden Steuerungseinheiten zu koppeln. Erfindungsgemäß werden die durch die Leistungshalbleiterschalter fließenden Ströme zunächst gemessen. Dies erfolgt beispielsweise unter Einsatz von Stromwandlern, deren Sekundäranschluss ein zum Strom durch den Leistungshalbleiter proportionales Niederspannungssignal liefert. Stromwandler sind als solche bekannt, so dass an dieser Stelle auf deren Ausbau und Funktionsweise nicht eingegangen zu werden braucht. Das dem Strom durch den jeweiligen Leistungshalbleiter proportionale Ausgangssignal des Stromwandlers wird unter Gewinnung von Abtastwerten mit einem Abtasttakt abgetastet und die Abtastwerte mittels eines Analog-Digital-Wandlers in digitale Stromwerte überführt und der Steuerungseinheit zur Regelung des Stromrichters zugeführt. Wird keine Überstrombedingung festgestellt - liegt beispielsweise kein Kurzschluss vor - werden die Leistungshalbleiterschalter beispielsweise durch das Pulsmuster einer Pulsweitenmodulation, also mit Hilfe der Nennbetriebsregelung, ein- und ausgeschaltet, so dass es zu der gewünschten Übertragung von Wirk- und Blindleistung kommt. Tritt ein Überstrom beispielsweise in Form eines Kurzschlusses auf, stellt die Logik der Steuerungseinheit fest, dass eine Überstrombedingung vorliegt und veranlasst ein Abschalten wenigstens der Leistungshalbleiterschalter, die mit dem Kurzschlussstrom belastet sind. Somit können beispielsweise nur die Leistungshalbleiterschalter der mit dem Überstrom beaufschlagten Phase abgeschaltet werden. Abweichend davon ist es jedoch auch möglich, alle Leistungshalbleiterschalter aller Phasen bei Erkennen eines Überstroms abzuschalten. Die oder der Leistungshalbleiterschalter bleiben über die Impulssperrdauer hinweg abgeschaltet. Anschließend werden die mit dem positiven Gleichspannungsanschluss verbundenen Leistungshalbleiterschalter eingeschaltet und alle Leistungshalbleiterschalter, die mit dem negativen Gleichspannungsanschluss verbunden sind, ausgeschaltet. Alternativ dazu ist es auch möglich, nach der Impulssperrdauer alle mit dem negativen Gleichspannungsanschluss verbundenen Leistungshalbleiterschalter einzuschalten und gleichzeitig alle mit dem positiven Gleichspannungsanschluss verbundenen Leistungshalbleiterschalter auszuschalten. Mit anderen Worten wird erfindungsgemäß ein Nullspannungszeiger realisiert. Dieser Nullspannungszeiger bewirkt ein sanftes Abklingen der Phasenströme, insbesondere bei Inselnetzen. Auf diese Weise kommt es zu einem allmählichen Absinken des Kurzschlussstromes bis schließlich die Überstrombedingung nicht mehr erfüllt wird. Stellt die Steuer- und Regelungseinheit ein solches Fehlen der Überstrombedingung fest, wird die Regelung auf die übliche Nennbetriebsregelung umgestellt. Beispielsweise wird das Pulsmuster der Regelung für den Normalbetrieb verwendet. Kommt es zu einem erneuten Feststellen der Überstrombedingung, erfolgt wieder das Abschalten wenigstens der mit dem Kurzschlussstrom belasteten Leistungshalbleiterschalter, anschließend erfolgt die Realisierung eines Nullspannungszeigers und so weiter. Das erfindungsgemäße Verfahren lässt sich in marktübliche Mikrocontroller, die zur Regelung von selbstgeführten Niederspannungs-Stromrichtern eingesetzt werden, implementieren. Das erfindungsgemäße Verfahren ist daher aufwandsarm und erlaubt im Verteilnetz die selektive Abschaltung bestimmter Netzbereiche bei Kurzschlussströmen. Hohe Stromverzerrungen werden erfindungsgemäß vermieden.

Vorteilhafterweise werden die gemessenen Stromwerte mit einer Taktfrequenz von über 5 kH abgetastet. Mit einer solchen Abtastrate ist eine hinreichend schnelles Eingreifen des erfindungsgemäßen Verfahrens bei Überströmen, beispielsweise Kurzschlussströmen, erreicht, so dass unerwünschte Stromschwankungen, Spannungsspitzen und dergleichen noch wirkungsvoller vermieden sind.

Zweckmäßigerweise ist die Impulssperrdauer gleich der verbleibenden Pulsperiode des oder der Leistungshalbleiterschalter der/die mit digitalen Stromwerten belastet sind, welche die Überstrombedingung erfüllen. Sind mehrere Phasen mit Überströmen belastet, ist die Impulssperrdauer gleich der verbleibenden Pulsperiode. Während der Impulssperrdauer wird der betreffende Strang mit einer Impulssperre belegt. Hierdurch wird nicht nur ein weiterer Stromanstieg vermieden, sondern im Gegenteil der Strom abgebaut.

Zweckmäßigerweise werden über die Impulssperrdauer hinweg alle Leistungshalbleiterschalter abgeschaltet. Durch das Abschalten aller Leistungshalbleiterschalter vereinfacht sich die Regelung. Nachteilige Effekte treten hierdurch nicht auf.

Zweckmäßigerweise liegt eine Überstrombedingung vor, wenn die digitalen Stromwerte einen Schwellenwert überschreiten. Die Logik der Steuerungseinheit vergleicht die gemessenen digitalen Stromwerte mit dem Schwellenwert. Solange die Stromwerte größer als der Schwellenwert sind, liegt eine Überstrombedingung vor. Bei einer Variante liegt dann keine Überstrombedingung mehr vor, wenn die Messwerte den Schwellenwert unterschreiten.

Abweichend hiervon kann es erfindungsgemäß vorteilhaft dass, eine Überstrombedingung erst dann nicht mehr vorliegt, wenn die digitalen Stromwerte einen zweiten Schwellenwert unterschreiten, wobei der zweite Schwellenwert kleiner ist als der erste Schwellenwert. Auf diese Weise erfolgt die Steuerung gemäß einer Hysterese.

Vorteilhafterweise wird bei Vorliegen einer Überstrombedingung die Soll-Amplitude der Drehspannung gegenüber der bei Normalbetrieb herrschenden Nennbetriebsamplitude der Regelung schrittweise verringert, und bei anschließendem Wegfall der Überstrombedingung, die Soll-Amplitude der Drehspannung schrittweise erhöht. Hierzu wird beispielsweise ein Reduktionsfaktor eingeführt, der bei Vorliegen einer Überstrombedingung, sukzessive von 1 bis 0 reduziert wird. Bei anschließendem Wegfall der Überstrombedingung wird die von der Regelung geforderte Spannungsamplitude, also die Soll-Amplitude, mit dem Reduktionsfaktor multipliziert. Dies wird auch als Reduktion der Aussteuerung bezeichnet. Bei Wegfall der Überstrombedingung wird der Reduktionsfaktor wieder schrittweise bis 1 erhöht. Hierbei kann es zu einer erneuten Überstrombedingung kommen, so dass erneut der Reduktionsfaktor sukzessive reduziert wird. Abweichend hiervon wird bei einem Wegfall der Überstrombedingung der Reduktionsfaktor langsam wieder erhöht und somit nach hinreichend langem Wegfall der Überstrombedingung die Amplitude des Nennbetriebs erreicht. Die Absenkung der Aussteuerung der Nennbetriebsregelung erfolgt deutlich ausgeprägter als die schleichende Erhöhung der Aussteuerung im Anschluss an das Vorliegen einer Überstrombedingung. Zweckmäßigerweise ist das Verteilnetz ein Inselnetz, das im Wesentlichen keine eigene Spannungsquelle aufweist. Das erfindungsgemäße Verfahren ist jedoch auch zur Regelung von Stromrichtern geeignet, die wechselstromseitig mit einem Verteilnetz verbunden sind, welches eigene Spannungsquellen beispielsweise in Form von Generatoren aufweist.

Weitere zweckmäßige Ausgestaltungen und Vorteile der Erfindung sind Gegenstand der nachfolgenden Beschreibung von Ausführungsbeispielen der Erfindung unter Bezug auf die Figuren der Zeichnung, wobei gleiche Bezugszeichen auf gleich wirkende Bauteile verweisen und wobei
- Figur 1: den grundsätzlichen Aufbau einer Gleichstromnetzkopplung mit selbstgeführten Leistungshalbleiterschaltern zeigt,
- Figur 2: den speisenden Stromrichter der Gleichstromnetzkopplung gemäß Figur 1 und das hier als Inselnetz realisierte Verteilnetz in schematischer Darstellung zeigt und
- Figur 3: den Stromverlauf einer Phase eines Stromrichters gemäß Figur 2 in schematischer Darstellung zeigt.

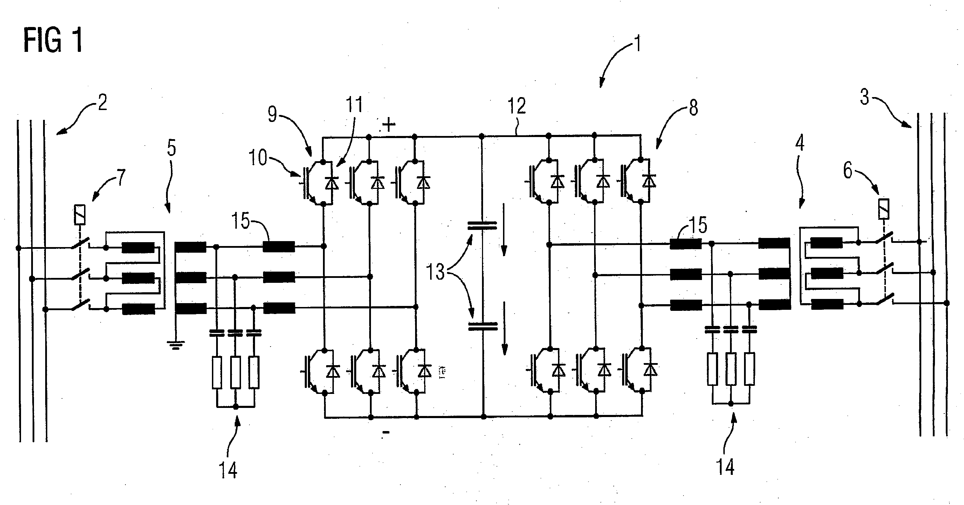

Figur 1 zeigt eine Gleichstromnetzkopplung 1 zur Energieversorgung eines Inselnetzes 2 durch ein Versorgungsnetz 3. Das Versorgungsnetz 3 ist über einen Transformator 4 und das Inselnetz 2 mit einem Transformator 5 mit der Hochspannungsgleichstrombrücke 1 verbunden, wobei Schalter 6 und 7 zur Abkopplung der Hochspannungsgleichstrombrücke 1 von dem jeweiligen Versorgungsnetz 3 beziehungsweise von dem Inselnetz 2 vorgesehen sind.

Die Gleichstromnetzkopplung 1 weist zwei Stromrichter 8 und 9 mit selbstgeführten Leistungshalbleiterschaltern 10 in einer 6-Puls-Brückenschaltung auf. In Parallelschaltung jedes Leistungshalbleiterschalters 10 ist eine Freilaufdiode 11 vorgesehen. Die Stromrichter 8 und 9 sind über einen Gleichspannungszwischenkreis 12 miteinander verbunden, der einen mit "+"-Zeichen versehenen positiven Gleichspannungsanschluss sowie einen mit "-"-Zeichen versehenen negativen Gleichspannungsanschluss ausbildet. Zwischen dem positiven und negativen Anschluss des Gleichspannungszwischenkreises 12 sind Energiespeicher in Form von Kondensatoren 13 geschaltet.

Zum Unterdrücken von Oberschwingungen, die beim Umrichten des Stroms auftreten, sind Filterbänke 14 vorgesehen, die jeweils zwischen den Transformatoren 4, 5 und den Stromrichtern 8 beziehungsweise 9 in Parallelschaltung angeschlossemisind. Schließlich sind Induktivitäten 15 in jede Phase geschaltet, um einen glatten Stromverlauf bereitzustellen.

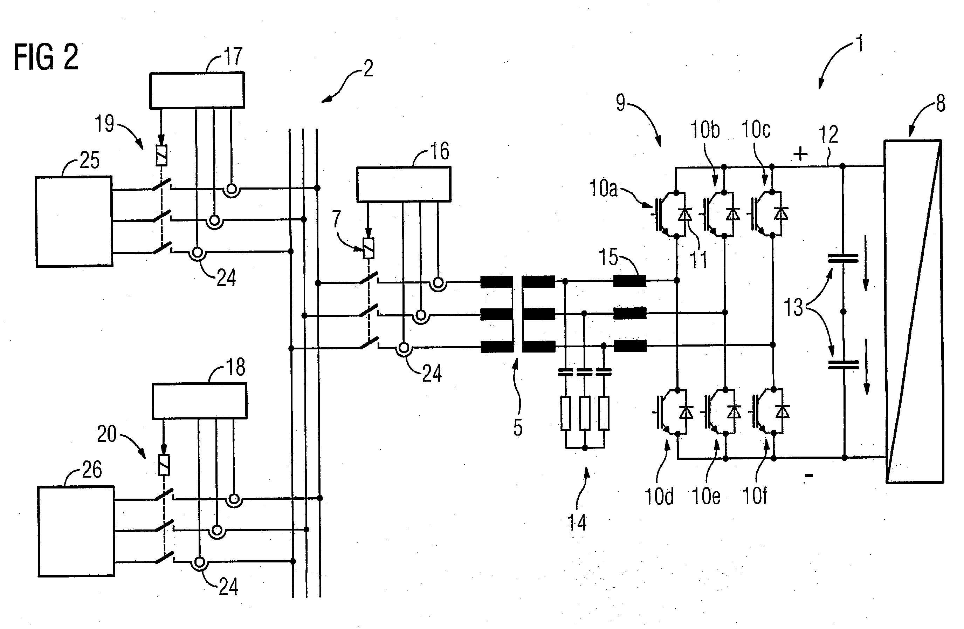

Figur 2 zeigt die Gleichstromnetzkopplung 1 gemäß Figur 1, wobei der Stromrichter 8, der zur Regelung der Spannung im Gleichstromzwischenkreis 12 vorgesehen ist, nur noch schematisch dargestellt ist. Insbesondere sind in dieser Darstellung Schutzgeräte 16, 17 und 18 erkennbar, die in ihrer Wirkung gestaffelt in die Energieverteilung eingreifen und dazu jeweils mit einem Schalter 7, 19 beziehungsweise 20 zusammenwirken. Zur Strommessung sind Stromwandler 24 vorgesehen, die ein der jeweiligen Phase proportionales Ausgangssignal erzeugen, das von der jeweiligen Steuerungseinheit 16, 17 oder 18 abgetastet und digitalisiert wird.

Liegt in einem Netzteilbereich 25 des Inselnetzes 2 ein Kurzschlussstrom vor, fließt ein vom Stromrichter 9 gespeister Kurzschlussstrom und wird mittels des Stromwandlers 24 sowohl von dem Schutzgerät 16 als auch 17 erkannt. Die Schutzgeräte sind so parametriert, dass zunächst das Schutzgerät 17 anspricht und damit gezielt das Teilnetz 25 über den Schalter 19 vom Inselnetz 2 abschaltet, ohne die Stromversorgung des Teilnetzes 26 des Inselnetzes 2 zu beeinträchtigen. Nach Abschalten des Teilnetzes 25 ist ein Kurzschluss und somit ein Abschalten des gesamten Inselnetzes 2 durch das Schutzgeräte 16 vermieden. Das Schutzgerät 16 dient lediglich der Sicherheit und greift dann ein, wenn das Schutzgerät 17 auch nach einer längeren Zeitdauer nicht auslöst, so dass eine Beschädigung empfindlicher Bauteile vermieden ist.

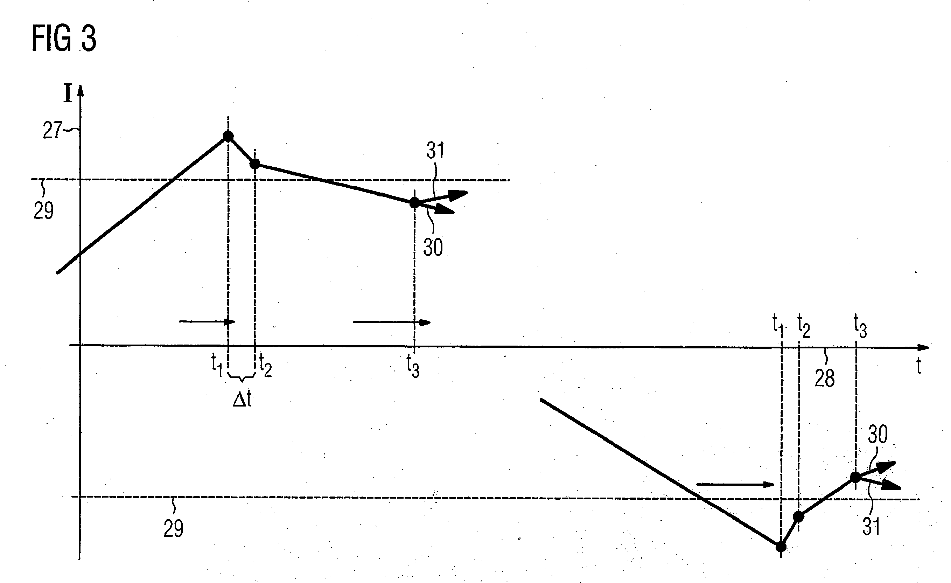

Figur 3 verdeutlicht ein Ausführungsbeispiel des erfindungsgemäßen Verfahrens in einer schematischen Darstellung. Auf der Achse 27 ist der durch eine Phase des Stromrichters 9 fließende Strom im Kurzschlussfall abgetragen. Die Zeitachse ist mit dem Bezugszeichen 28 versehen. Übersteigt der Betrag des Stromes in der gezeigten Phase einen Schwellenwert 29, werden die dieser Phase zugeordneten Leistungshalbleiterschalter 10 mit einer Impulssperre im Zeitpunkt t1 belegt. Mit anderen Worten werden die Leistungshalbleiterschalter der Phase ausgeschaltet oder mit anderen Worten die Leistungshalbleiter in ihre Sperrstellung überführt. Nach dem Ende der Impulssperrdauer, also nach dem Ende der Pulsperiode der Phase, wird im Zeitpunkt t2 ein Nullspannungszeiger erzeugt, indem alle dem positiven Anschluss zugeordneten Halbleiterschalter 10a, 10b und 10c eingeschaltet, die Leistungshalbleiterschalter 10d, 10e und 10f hingegen ausgeschaltet bleiben. Auf diese Weise kommt es zu einem weichen allmählichen Abklingen des Stromes, so dass heftige Stromschwankungen im Inselnetz 2 vermieden sind. Im Zeitpunkt t3 wird die Regelung von der Nennbetriebsregelung übernommen, jedoch mit einer geringeren Aussteuerung. Wurde der den Kurzschluss aufweisende Netzteil durch die Schutztechnik erfolgreich vom Netz genommen, geht der Strom aufgrund der resultierten Aussteuerung auf seinen Nennwert über, wie dies durch den unteren Pfeil 30 dargestellt ist. Liegt weiterhin ein Kurzschluss vor, steigt - wie durch den Pfeil 31 angedeutet - der Strom erneut über den Schwellenwert 29 an, so dass das zuvor beschriebene Verfahren erneut durchgeführt wird.

Eine entsprechende Regelung für negative Wechselströme ist in Figur 3 ebenfalls angedeutet.

## Patentansprüche

1. Verfahren zum Regeln eines an einer Gleichspannungsquelle (12) angeschlossenen Stromrichters (9) mit abschaltbaren Leistungshalbleiterschaltern (10a...10f), der zur Speisung eines Verteilnetzes (2) mit Drehspannung vorgesehen ist, bei dem durch die jeweiligen Leistungshalbleiterschalter (10a...10f) fließende Ströme unter Gewinnung von den Leistungshalbleiternschaltern (10a...10f) jeweils zugeordneten Stromwerten gemessen, die Stromwerte abgetastet und die abgetasteten Stromwerte unter Gewinnung digitaler Stromwerte, digitalisiert werden und die digitalen Stromwerte von einer in einer Regelungseinheit implementierten Logik auf das Vorliegen einer Überstrombedingung überprüft werden, wobei bei Nichterfüllung einer Überstrombedingung die Leistungshalbleiterschalter (10a...10f) mit Hilfe einer Nennbetriebsregelung ein- und abgeschaltet werden und bei Vorliegen einer Überstrombedingung wenigstens die Leistungshalbleiterschalter abgeschaltet werden, die mit digitalen Stromwerten belastetet sind, welche die Überstrombedingung erfüllen, nach Ablauf einer Impulssperrdauer und bei digitalen Stromwerten, welche die Überstrombedingung erfüllen, alle Leistungshalbleiterschalter (10a...10f), die mit dem positiven Gleichspannungsanschluss verbunden sind, eingeschaltet und alle Leistungshalbleiterschalter, die mit dem negativen Gleichspannungsanschluss verbunden sind, ausgeschaltet werden oder umgekehrt und wobei bei digitalen Stromwerten, welche nicht die Überstrombedingung erfüllen, die Regelung der Leistungshalbleiterschalter (10a...10f) wieder durch die Nennbetriebsregelung erfolgt.

2. Verfahren nach Anspruch 1,
**dadurch gekennzeichnet, dass** die gemessenen Stromwerte mit einer Taktfrequenz von über 5 Kilohertz abgetastet werden.

3. Verfahren nach Anspruch 1 oder 2,
**dadurch gekennzeichnet, dass** die Impulssperrendauer gleich der verbleibenden Pulsperiode des oder der Leistungshalbleiterschalter ist, der/die mit digitalen Stromwerten belastet ist/sind, welche die Überstrombedingung erfüllen.

4. Verfahren nach einem der vorhergehenden Ansprüche,
**dadurch gekennzeichnet, dass** über die Impulssperrdauer hinweg alle Leistungshalbleiterschalter (10a...10f) abgeschaltet werden.

5. Verfahren nach einem der vorhergehenden Ansprüche,
**dadurch gekennzeichnet, dass** eine Überstrombedingung vorliegt, wenn die digitalen Stromwerte einen Schwellenwert (29) überschreiten.

6. Verfahren nach Anspruch 5,
**dadurch gekennzeichnet, dass** eine Überstrombedingung erst dann nicht mehr vorliegt, wenn die digitalen Stromwerte einen zweiten Schwellenwert unterschreiten, wobei der zweite Schwellenwert kleiner ist als der erste Schwellenwert.

7. Verfahren nach einem der vorhergehenden Ansprüche,
**dadurch gekennzeichnet, dass** bei Vorliegen einer Überstrombedingung die Soll-Amplitude der Drehspannung gegenüber der bei Normalbetrieb herrschenden Nennbetriebsamplitude der Regelung schrittweise verringert wird, und bei anschließendem Wegfall der Überstrombedingung die Soll-Amplitude der Drehspannung schrittweise erhöht wird.

## Claims

1. Method for regulating a converter (9), which is connected to a DC voltage source (12), with power semiconductor switches (10a...10f) which can be switched off, which converter is provided for feeding a distribution network (2) with three-phase voltage, in which method currents flowing through the respective power semiconductor switches (10a...10f) are measured so as to obtain current values which are in each case associated with the power semiconductor switches (10a...10f), the current values are sampled and the sampled current values are digitized so as to obtain digital current values, and the digital current values are monitored by logic implemented in a regulation unit for the presence of an overcurrent condition, in the event of an overcurrent condition not being met, the power semiconductor switches (10a...10f) being switched on and off with the aid of rated operation regulation and, in the event of the presence of an overcurrent condition, at least the power semiconductor switches being switched off which are subjected to digital current values which meet the overcurrent condition once a pulse inhibiting period has expired and, in the case of digital values which meet the overcurrent condition, all the power semiconductor switches (10a...10f) which are connected to the positive DC voltage connection being switched on and all the power semiconductor switches which are connected to the negative DC voltage connection being switched off, or vice versa, and, in the case of digital current values which do not meet the overcurrent condition, the regulation of the power semiconductor switches (10a...10f) again taking place by means of the rated operation regulation.

2. Method according to Claim 1, **characterized in that** the measured current values are sampled at a clock frequency of over 5 kilohertz.

3. Method according to Claim 1 or 2, **characterized in that** the pulse inhibiting period is equal to the remaining pulse period of the power semiconductor switch(es) which is/are subjected to digital current values which meet the overcurrent condition.

4. Method according to one of the preceding claims, **characterized in that** all the power semiconductor switches (10a...10f) are switched off throughout the pulse inhibiting period.

5. Method according to one of the preceding claims, **characterized in that** an overcurrent condition is present if the digital current values exceed a threshold value (29).

6. Method according to Claim 5, **characterized in that** an overcurrent condition is no longer present only when the digital current values fall below a second threshold value, the second threshold value being lower than the first threshold value.

7. Method according to one of the preceding claims, **characterized in that**, in the event of the presence of an overcurrent condition, the desired amplitude of the three-phase voltage is reduced stepwise in comparison with the rated operation amplitude of the regulation which prevails during normal operation, and, in the event of the subsequent elimination of the overcurrent condition, the desired amplitude of the three-phase voltage is increased stepwise.

## Revendications

1. Procédé de régulation d'un convertisseur ( 9 ) qui est relié à une source ( 12 ) de tension continue, qui a des commutateurs ( 10a ... 10f ) à semiconducteur de puissance pouvant être déconnectés et qui est prévu pour alimenter un réseau ( 2 ) de distribution en tension triphasé, dans lequel on mesure des courants passant dans les commutateurs ( 10a ... 10f ) à semiconducteur de puissance respectif en obtenant par les commutateurs ( 10a ... 10f ) à semiconducteur de puissance respectivement des valeurs associées, on échantillonne les valeurs de courant et l'on numérise les valeurs de courant échantillonnées en obtenant des valeurs de courant numériques et on contrôle la présence d'une condition de surintensité sur les valeurs de courant numériques par une logique mise en oeuvre dans une unité de régulation, dans lequel, si une condition de surintensité n'est pas satisfaite, on ferme et on ouvre les commutateurs ( 10a ... 10f ) à semiconducteur de puissance à l'aide d'une régulation de fonctionnement nominal et, en présence d'une condition de surintensité, on ouvre au moins les commutateurs à semiconducteur de puissance, qui sont chargés de valeurs de courant numériques qui satisfont la condition de surintensité, après expiration d'une durée de blocage des impulsions et, pour des valeurs de courant numériques qui satisfont la condition de surintensité, on ferme tous les commutateurs ( 10a ... 10f ) à semiconducteur de puissance qui sont reliés à la borne de tension continue positive et l'on ouvre tous les commutateurs à semiconducteur de puissance qui sont reliés à la borne de tension continue négative ou inversement et dans lequel, pour des valeurs de courant numériques qui ne satisfont pas la condition de surintensité, on effectue à nouveau la régulation des commutateurs ( 10a ... 10f ) à semiconducteur de puissance par la régulation de fonctionnement nominal.

2. Procédé suivant la revendication 1,
**caractérisé en ce que** l'on échantillonne les valeurs de courant mesurées à une fréquence d'horloge supérieure à 5 kilohertz.

3. Procédé suivant la revendication 1 ou 2,
**caractérisé en ce que** la durée de blocage des impulsions est égale à la durée restante des impulsions du ou des commutateurs à semiconducteur de puissance qui est sont chargés par des valeurs de courant numériques, lesquelles satisfont la condition de surintensité.

4. Procédé suivant l'une des revendications précédentes,
**caractérisé en ce que** au-delà de la durée de blocage des impulsions, on ouvre tous les commutateurs ( 10a ... 10f ) à semiconducteur de puissance.

5. Procédé suivant l'une des revendications précédentes,
**caractérisé en ce qu'**il y a une condition de surintensité, si les valeurs de courant numériques dépassent une valeur ( 29 ) de seuil.

6. Procédé suivant la revendication 5,
**caractérisé en ce qu'**il n'y a plus une condition de surintensité, seulement si les courants de valeur numériques sont inférieures à une deuxième valeur de seuil, la deuxième valeur de seuil étant plus petite que la première valeur de seuil.

7. Procédé suivant l'une des revendications précédentes,
**caractérisé en ce qu'**en présence d'une condition de surintensité, on diminue pas à pas l'amplitude de consigne de la tension triphasée par rapport à l'amplitude de fonctionnement nominal de la régulation régnant dans le fonctionnement normal et si, ensuite, la condition de surintensité disparaît, on augmente pas à pas l'amplitude de consigne de la tension triphasée.
